# EUROPÄISCHE PATENTSCHRIFT

(11) **EP 0 352 602 B1**
(45) Veröffentlichungstag und Bekanntmachung des Hinweises auf die Patenterteilung: **03.11.1993**
(21) Anmeldenummer: 89113141.9
(22) Anmeldetag: 18.07.1989
(51) Int. Cl.: G01D 5/26, G01D 5/34

(54) **Optischer Lagegeber**
Position-providing device
Dispositif de mesure de position

(30) Priorität: 27.07.1988 DE 3825475
(43) Veröffentlichungstag der Anmeldung: 31.01.1990
(73) Patentinhaber: Bodenseewerk Gerätetechnik GmbH, 88662 Überlingen (DE)
(72) Erfinder: Etzkorn, Horst, D-7767 Spplingen (DE); Hauck, Roland, D-7769 Hohenfels-Deutwand (DE)
(74) Vertreter: Weisse, Jürgen, Dipl.-Phys. Patentanwalt

(56) Entgegenhaltungen:
- EP-A- 0 251 632
- DE-A- 1 773 471
- US-A- 4 596 466
- JOURNAL OF THE PHYSICS E/SCIENTIFIC INSTRUMENTS, Band 21, Nr. 2, Februar 1988, Seiten 187-192; D. HICKMANN: "An optical sensor based on temporal coherence properties"
- PROCEEDINGS IEEE/AIAA - 7TH DIGITAL AVIONICS SYSTEMS CONFERENCE, Fort Worth, Texas, 13.-16. Oktober 1986, Seiten 437-442; W.L. GLOMB, Jr.: "Passive fiber-optic coherence multiplexing for aircraft sensors"

## Beschreibung

### Technisches Gebiet

Die Erfindung betrifft einen optischen Lagegeber, enthaltend
(a) ein bewegliches Codierteil, das mit einer Codierung versehen ist, und
(b) eine optische Abtastvorrichtung zum Abtasten der Codierung, bei welcher ein Lichtbündel auf die Codierung geleitet und nach Beeinflussung durch die Codierung zur Erzeugung eines Abtastsignals, aus dem die Lageinformation ableitbar ist, erfasst wird.

Es kann sich dabei um einen Drehwinkelgeber handeln, der eine Verdrehung des beweglichen Codierteiles in ein digitales Ausgangssignal umsetzt. Es kann sich jedoch auch um einen digitalen Weggeber handeln, der eine geradlinige Bewegung erfasst und ein entsprechendes digitales Signal erzeugt. Der Drehwinkel oder Weggeber kann inkremental arbeiten, also bei seiner Bewegung eine Folge von Zählsignalen erzeugen, die von einem Zähler gezählt werden. Dabei muss allerdings sichergestellt sein, dass die Zählung von einer festen Referenzposition aus erfolgt. Wenn sich das bewegliche Codierteil vorwärts und rückwärts bewegen kann, muß ausserdem für die Bildung von Richtungssignalen gesorgt werden. Die Erfindung ist aber auch anwendbar, wenn die Position des beweglichen Codierteiles absolut in Form einer Codierung abgelegt ist.

### Zugrundeliegender Stand der Technik

Es sind inkrementale Lagesignalgeber bekannt, bei denen eine drehbare, kreisrunde Scheibe an ihrem Rand eine Spur von radialen Strichen aufweist, welche durch eine photoelektrische Lichtschranke abgetastet werden. Die bei einer Drehbewegung der Scheibe erhaltenen Impulse sind auf einen Zähler geschaltet, dessen Zählerstand ein Maß für die Stellung der Scheibe liefert. Um ein Richtungssignal zu erhalten, sind zwei Spuren mit Strichen vorgesehen, die um eine Viertelperiode gegeneinander winkelversetzt sind und getrennt abgetastet werden. Eine ebenfalls abgetastete Referenzmarke liefert einen Nullimpuls, bei welchem der Zähler auf null zurückgesetzt wird. Um einerseits eine hohe Auflösung zu erzielen, was eine sehr feine Teilung erfordert, aber andererseits eine brauchbare Lichtstromänderung zu erhalten, die einen sauberen Impuls liefert, ist über der Spur mit den Strichen ein stillstehendes Strichgitter von gleicher Teilung vorgesehen. Ein Lichtbündel von endlichem Querschnitt tritt durch das stillstehende Strichgitter und die Spur mit den Strichen. Dabei ist die Intensität des Lichtes abwechselnd ein Maximum oder ein Minimum, je nachdem ob die Striche der Spur mit denen des Strichgitters in Deckung sind oder auf Lücke dazu stehen (DE-A-1 153 909, DE-A-33 27 849, DE-C-20 02 583, EP-A-0 184 628, EP-A-0 222 136).

Bei üblichen Stellungsgebern dieser Art wird das bewegliche Codierteil durch Lichtschranken abgetastet. Diese Lichtschranken liefern elektrische Signale, die über elektrische Signalleitungen übertragen werden. Für mehrere Signale sind mehrere Signalleitungen erforderlich. Solche elektrischen Signalleitungen sind störanfällig. Insbesondere können elektrische Signalleitungen von elektromagnetischen Feldern beeinflußt werden.

Es ist bekannt, optische Signale in lichtleitenden Fasern zu übertragen. Die Übertragung von Signalen in lichtleitenden Fasern hat den Vorteil, daß die optische Signalübertragung nicht durch äußere elektromagnetische Felder gestört werden kann. Es ist auch bekannt, in einer solchen lichtleitenden Faser mehrere optische Signale gleichzeitig zu übertragen.

Durch eine Veröffentlichung "Proceedings IEEE/AIAA - 7th Digital Avionics Systems Conference, Fort Worth, Texas, 13 - 16. Oktober 1986, Seiten 437 - 442; W.L. Glomb, Jr. : Passive fiber-optic coherence multiplexing for aircraft sensors" ist eine Anordnung bekannt, bei welcher verschiedene Informationen von verschiedenen senderseitigen Kanälen, die von einer nicht näher beschriebenen Code-Platte geliefert werden, über einen einzigen Lichtleiter übertragen und dann empfängerseitig wieder getrennt werden. Zu diesem Zweck sind in den verschiedenen Kanälen senderseitige Verzögerungsleitungen vorgesehen. Eine vorlaufende Lichtwelle von einem Laser wird über den Lichtleiter übertragen und auf die verschiedenen senderseitigen Kanäle verteilt. Die reflektierende Code-Platte wirft die Wellen mit irgendwelchen Informationen in die Lichtleiter-Kanäle zurück. Durch die Verzögerungsleitungen werden die zum Empfänger übertragenen Lichtwellen mit solche Verzögerungen übertragen, daß die Laufzeitdifferenzen der Wellen aus den verschiedenen Kanälen größer als die Kohärenzlänge sind. In den verschiedenen Kanälen des Empfängers sind Interferometer angeordnet. Die Interferometer enthalten einen Signal-Arm, der über einen Koppler mit der über den Lichtleiter empfangenen rücklaufenden Welle von dem Sender beaufschlagt ist, und einen Referenz-Arm, der über einen ersten Koppler mit der von dem Laser vorlaufenden Welle beaufschlagt ist, welche über einen zweiten, empfängerseitigen Koppler auf die verschiedenen Kanäle verteilt wird. In den Referenz-Armen des Empfängers liegen Referenz-Verzögerungsleitungen, die so ausgelegt sind, dass sie jeweils die beiden Arme in jedem Interferometer gleich machen, also komplementär zu den Verzögerungsleitungen des Senders sind. In dem Referenzarm liegt ein Phasenmodulator.

### Offenbarung der Erfindung

Der Erfindung liegt die Aufgabe zugrunde, bei einem optischen Lagegeber der eingangs genannten Art bei hoher Auflösung ohne zusätzliche stationäre Strichgitter Signale ausreichender Amplitude zu erzeugen.

Eine weitere Aufgabe der Erfindung besteht darin, bei einem optischen Lagegeber der eingangs genannten Art auf einfache Weise mehrere optische Signale auf einem Kanal, beispielsweise mittels einer einzigen lichtleitenden Faser zu übertragen.

Erfindungsgemäss wird diese Aufgabe dadurch gelöst, dass bei einem optischen Lagegeber der eingangs genannten Art
(c) die Codierung zur Erzeugung definierter Laufzeitdifferenzen innerhalb des Lichtbündels ausgebildet ist und
(d) die optische Abtastvorrichtung ein auf die Laufzeitdifferenzen ansprechendes Interferometer zur Umsetzung der Laufzeitdifferenzen in beobachtbare Helligkeitsänderungen enthält.

Die Codierung bewirkt dann eine definierte Laufzeitänderung des Lichtbündels, die mittels des Interferometers in eine Helligkeitsänderung umsetzbar ist. Die Codierung erfolgt nicht durch absorbierende Marken sondern in Reflexion oder Transmission durch Laufzeitänderungen. Das abzutastende, bewegliche Codierteil absorbiert dabei praktisch kein Licht, so dass ein sehr feines Lichtbündel mit hoher Energiedichte für die Abtastung benutzt werden kann. Es können Lichtbündel mit verschiedenen Laufzeitunterschieden über einen Kanal, z.B. über eine lichtleitende Faser übertragen werden. Die Trennung der Informationen erfolgt dann mittels des Interferometers.

Dabei ist es vorteilhaft, wenn
(a) das Lichtbündel das bewegliche Codierteil in einem Lichtfleck trifft, in dessen Bereich die Codierung mehrere verschiedene Laufzeitdifferenzen in verschiedenen überlagerten Teillichtbündeln bewirkt, wobei die Intensitäten des Lichts mit den verschiedenen Laufzeitdifferenzen im Verhältnis zueinander von der Stellung des beweglichen Codierteiles zu dem Interferometer abhängen,
(b) die durch die Codierung erzeugten Laufzeitdifferenzen zwischen den besagten Teillichtbündeln größer sind als die Kohärenzlänge des Lichtes des Lichtbündels und
(c) durch das Interferometer zusätzliche Laufzeitdifferenzen erzeugbar sind, durch welche eine Interferenz zwischen den Teillichtbündeln bewirkt wird.

Durch die Codierung treten in dem Interferometer - Lichtbündel verschiedene Laufzeitdifferenzen zwischen den Teillichtbündeln auf. Die Intensität der einzelnen Teillichtbündel hängt von der Stellung des beweglichen Codierteiles ab. Da die Kohärenzlänge der Teillichtbündel kleiner ist als die durch die Codierung hervorgerufenen Laufzeitdifferenzen, interferieren die Teillichtbündel nicht miteinander. Durch das Interferometer wird nun eine weitere Laufzeitdifferenz eingeführt, durch welche eine Interferenz zwischen den Teillichtbündeln bewirkt wird. Diese Interferenz setzt die Laufzeitdifferenzen in beobachtbare Helligkeiten um. Die Interferenz hängt von dem Verhältnis der Intensitäten der Teillichtbündel ab und ändert sich daher in Abhängigkeit von der Stellung des abzutastenden beweglichen Codierteiles.

Es können dann verschiedene Informationen auf einem Kanal übertragen werden, die durch verschiedene Laufzeitdifferenzen gegenüber dem einfallenden Licht markiert und in den stellungsabhängigen Intensitäten des mit den betreffenden Laufzeitdifferenzen markierten Lichts enthalten sind. Es können so in einem Kanal z.B. gleichzeitig Zählimpulse und Richtungsinformationen übertragen werden, oder es kann eine Interpolation zwischen benachbarten Zählstellungen bei einem inkrementalen Stellungsgeber erfolgen.

Weitere Ausgestaltungen der Erfindung sind Gegenstand der abhängigen Ansprüche 4 bis 15.

Einige Ausführungsbeispiele der Erfindung sind nachstehend unter Bezugnahme auf die zugehörigen Zeichnungen näher erläutert.

### Kurze Beschreibung der Zeichnungen

- Fig.1: zeigt schematisch eine erste Ausführungsform der Erfindung mit einem Michelson - Interferometer, bei welchem das abzutastende, bewegliche Codierteil einen Teil des Interferometers bildet.
- Fig.2: zeigt schematisch eine zweite Ausführungsform der Erfindung mit einem Michelson - Interferometer, bei welchem das abzutastende, bewegliche Codierteil keinen Teil des Michelson - Interferometers bildet.
- Fig.3: zeigt schematisch in stark vergrößertem Maßstab die Oberflächenstruktur des abzutastenden, beweglichen Codierteiles in dem einfachsten Fall eines inkrementalen Lagegebers mit nur einer einzigen Bewegungsrichtung.
- Fig.4: zeigt schematisch in stark vergrößertem Maßstab die Oberflächenstruktur eines richtungsabhängig abzutastenden, beweglichen Codierteiles.
- Fig.5: zeigt eine andere Ausführung der Oberflächenstruktur eines richtungsabhängig abzutastenden, beweglichen Codierteiles.
- Fig.6: zeigt eine dritte Ausführung, ähnlich Fig.2, eines optischen Lagegebers.
- Fig.7: zeigt schematisch und in stark vergrößertem Maßstab das Lichtbündel und die Oberflächenstruktur des abzutastenden, beweglichen Codierteiles.
- Fig.8: zeigt schematisch Signale, wie sie bei einem optischen Lagegeber nach Fig.6 auftreten.

### Bevorzugte Ausführungen der Erfindung

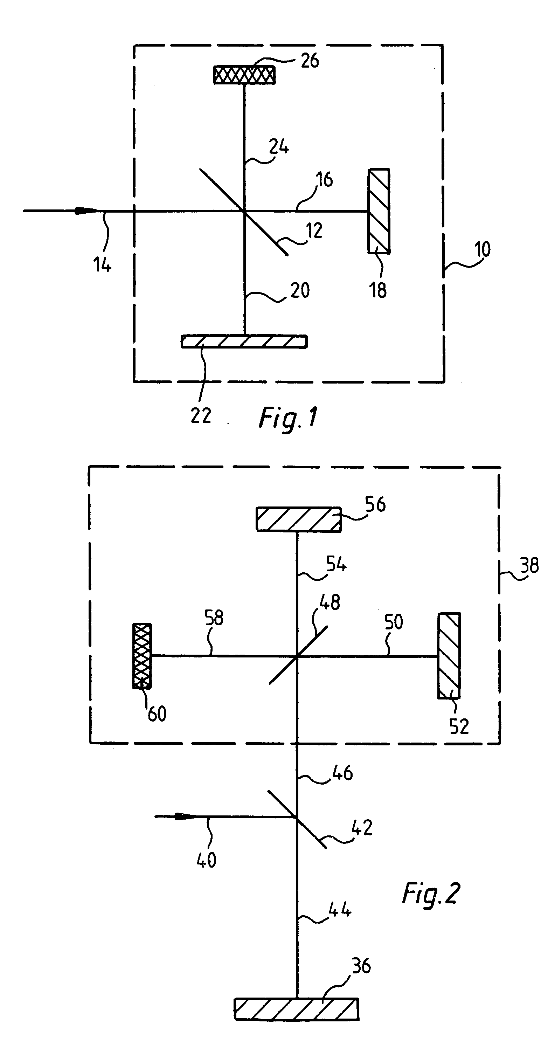

Bei der Ausführungsform nach Figur 1 bildet das abzutastende, bewegliche Codierteil einen Teil eines Michelson - Interferometers, das generell mit 10 bezeichnet ist. Das Michelson-Interferometer enthält einen Strahlenteiler 12. Der Strahlenteiler 12 ist unter einem Winkel von 45° zu einem Interferometer-Lichtbündel 14 angeordnet. Von dem Interferometer-Lichtbündel 14 tritt ein Teillichtbündel 16 durch den Strahlenteiler 12 hindurch und fällt senkrecht auf einen Spiegel 18. Der Spiegel 18 wirft das Teillichtbündel 16 in die Einfallsrichtung zurück. Ein weiteres Teillichtbündel 20 wird von dem Strahlenteiler 12 auf das abzutastende, bewegliche Codierteil 22 geleitet. Das Teillichtbündel 20 fällt senkrecht auf das bewegliche Codierteil 22 und wird von diesem ebenfalls in die Einfallsrichtung zurückgeworfen. Der von dem zurückgeworfenen Teillichtbündel 16 an dem Strahlenteiler 12 reflektierte Teil und der von dem zurückgeworfenen Teillichtbündel 20 von dem Strahlenteiler 12 durchgelassene Teil sind in einem Lichtbündel 24 überlagert. Das Lichtbündel 24 fällt auf einen photoelektrischen Detektor 26. Das abzutastende, bewegliche Codierteil 22, beispielsweise eine drehbare Scheibe eines Drehwinkelgebers, ist auf seiner dem Strahlenteiler 12 zugewandten Oberfläche mit einer Codierung versehen, durch welche das zurückgeworfene Teillichtbündel 20 beeinflußt wird. Diese Codierung besteht darin, daß definierte Laufzeitdifferenzen des Lichtbündels erzeugt werden. Auf diese Laufzeitdifferenzen spricht das Michelson - Interferometer an.

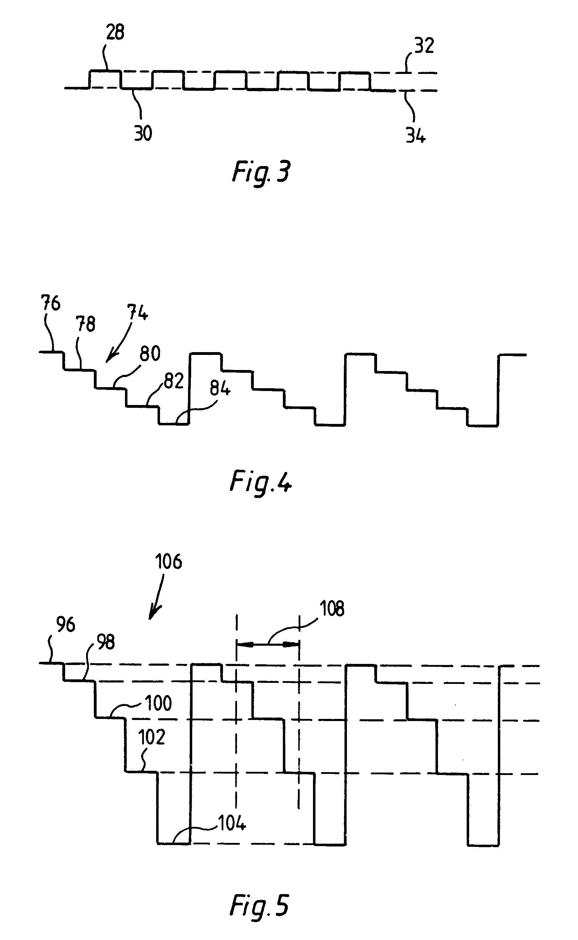

In Fig.3 ist schematisch eine mögliche Oberflächenstruktur des abzutastenden, beweglichen Codierteiles 22 in stark vergrößertem Maßstab dargestellt. Die Codierung ist von unterschiedlich tiefen, reflektierenden, zu dem einfallenden Lichtbündel 20 senkrechten Flächenteilen gebildet.

Bei der Ausführung nach Fig.3 sind die Flächenteile 28 und 30 abwechselnd in einer von zwei parallelen Flächen 32 bzw. 34 angeordnet, deren Abstand der besagten Laufzeitdifferenz entspricht.

Die durch die Codierung erzeugten Laufzeitdifferenzen sind größer als die Kohärenzlänge des Lichtes des Lichtbündels 14 bzw. 20.

Es sei angenommen, daß die optischen Weglängen der Teillichtbündel 16 und 20 von dem Strahlenteiler 12 zu dem Spiegel 18 bzw. von dem Strahlenteiler 12 zu den oberen Flächenteilen 28 sich innerhalb des Bereiches der Kohärenzlänge unterscheiden. Dann findet eine Interferenz zwischen den Teillichtbündeln 16 und 20 statt. Die Flächenteile 28 erzeugen daher eine Interferenzfigur am Detektor. Wenn das Teillichtbündel 20 auf einen Flächenteil 30 trifft, dann unterscheiden sich die optischen Weglängen der Teillichtbündel 16 und 20 um mehr als die Kohärenzlänge. Die beiden Teillichtbündel können nicht mehr miteinander interferieren, und es tritt keine Interferenzfigur an dem Detektor 26 auf. Bei der Bewegung des Codierteiles 22 an dem Teillichtbündel 20 vorbei treten somit abwechselnd Interferenzfiguren und keine Interferenzfiguren am Detektor 26 auf.

Das beschriebene Verfahren würde eine sehr genaue Positionierung des Spiegels 18 und des beweglichen Codierteiles 22 bedingen. Um diese Notwendigkeit zu vermeiden, kann der Spiegel 18 z,B, durch einen piezoelektrischen Schwinger in Richtung des Teillichtbündels 16 hin- und herbewegt werden. Die Frequenz dieser Bewegung muß größer sein als die Frequenz der zu zählenden Signale. Die Amplitude der Bewegung muß größer als die durch die Codierung erzeugte Laufzeitdifferenz sein. Bei Abtastung der Flächenteile 28 erscheint dann eine Folge von Interferenzpeaks, nämlich jedesmal ein Interferenzpeak, wenn die optische Wegdifferenz der miteinander interferierenden Teillichtbündel 16 und 20 innerhalb der Kohärenzlänge liegt. Bei Abtastung der Flächenteile 30 erscheinen keine Interferenzpeaks, weil der Unterschied der optischen Weglängen der Teillichtbündel größer als die Kohärenzlänge des verwendeten Lichtes ist. Fig.2 zeigt eine andere Ausführung eines Stellungsgebers.

Ein abzutastendes, bewegliches Codierteil, beispielsweise eine drehbare Scheibe eines Drehwinkelgebers, ist in Fig.2 mit 36 bezeichnet. Zur Abtastung einer auf dem beweglichen Codierteil angebrachten Markierung ist ein Interferometer 38 vorgesehen. Im Gegensatz zu der Ausführung von Fig.1 bildet in Fig.2 das bewegliche Codierteil 36 keinen Teil des Interferometers 38.

Ein Lichtbündel 40 fällt auf einen ersten Strahlenteiler 42, der unter 45° zu dem Lichtbündel 40 angeordnet ist und das Lichtbündel 40 nach unten in Fig.2 umlenkt. Das umgelenkte Lichtbündel 44 fällt senkrecht auf das abzutastende, bewegliche Codierteil 36 und wird von diesem in die Einfallsrichtung reflektiert. Das reflektierte Lichtbündel 44 tritt teilweise durch den Strahlenteiler 42 hindurch und gelangt als Interferometer - Lichtbündel 46 in das Interferometer 38.

Das Interferometer - Lichtbündel 46 fällt auf einen Strahlenteiler 48. Der Strahlenteiler 48 ist unter 45° zu dem Interferometer - Lichtbündel 46 angeordnet. Der Strahlenteiler 48 lenkt ein erstes Teillichtbündel 50 um zu einem ersten Spiegel 52. Das Teillichtbündel 50 fällt senkrecht auf den Spiegel 52 und wird von diesem in die Einfallsrichtung reflektiert. Ein zweites Teillichtbündel 54 tritt durch den Strahlenteiler 48 hindurch und trifft senkrecht auf einen zweiten Spiegel 56. Der zweite Spiegel 56 reflektiert das Teillichtbündel 54 in die Einfallsrichtung.

Das von dem ersten Spiegel 52 reflektierte Teillichtbündel 50 tritt teilweise durch den Strahlenteiler 48 hindurch. Das von dem zweiten Spiegel 56 reflektierte Teillichtbündel wird teilweise von dem Stahlenteiler 48 reflektiert. Der durch den Strahlenteiler 48 hindurchtretende Teil des Teillichtbündels 50 und der an dem Strahlenteiler 48 reflektierte Teil des Teillichtbündels 54 sind in einem Lichtbündel 58 überlagert. Das Lichtbündel 58 fällt auf einen photoelektrischen Detektor 60.

Es sei angenommen, daß das bewegliche Codierteil 36 wieder abwechselnd hochstehende und tiefliegende Flächenteile 28 bzw. 30 aufweist, wie in Fig.3 dargestellt ist. Die zweifache Tiefe der Flächenteile 30 gegenüber den Flächenteilen 20 ist wieder größer als die Kohärenzlänge des benutzten Lichtes. Die beiden Arme des Interferometers, also die optischen Weglängen zwischen dem Strahlenteiler 48 und den beiden Spiegeln ist um diesen Betrag unterschiedlich. Es sei angenommen, daß die optische Weglänge des Teillichtbündels 50 kürzer als die optische Weglänge des Teillichtbündels 54 ist. Wenn das vorlaufende Lichtbündel 44 nur auf einen Flächenteil 28 oder nur auf einen Flächenteil 30 fällt, tritt keine Interferenz der beiden auf den Detektor 60 fallenden, zu dem Lichtbündel 58 überlagerten Teillichtbündel auf. Die Laufzeitdifferenz, also die Differenz der optischen Weglängen der beiden Teillichtbündel 50 und 54 ist größer als die Kohärenzlänge. Fällt das Lichtbündel 44 aber teils auf einen Flächenteil 28 und teils auf einen Flächenteil 30, dann werden die beiden Teillichtbündel 50 und 54 wieder in je zwei "Unterlichtbündel" unterteilt, von denen das eine an einem Flächenteil 28 und das andere an einem Flächenteil 30 reflektiert worden ist.

Bezeichnet man mit s die Laufzeitdifferenz zwischen den Flächenteilen 28 und 30 und auch zwischen den optischen Weglängen der Teillichtbündel 50 und 54, wobei die optische Weglänge des an dem Flächenteil 28 und dem Spiegel 56 reflektierten Unterlichtbündels als Referenz betrachtet wird, dann zeigt das an dem Flächenteil 28 und dem Spiegel 52 reflektierte Unterlichtbündel des Teillichtbündels 50 eine Laufzeitdifferenz von -s, da die optische Weglänge des Teillichtbündels 50 um s kürzer ist als die optische Weglänge des Teillichtbündels 54. Das an dem Flächenteil 30 und dem Spiegel 56 reflektierte Unterlichtbündel des Lichtbündels 54 zeigt eine Laufzeitdifferenz von +s, da die optische Weglänge des Lichtbündels 44 zum Flächenteil 30 um s länger ist als die optische Weglänge des Lichtbündels 44 zum Flächenteil 28. Keines dieser drei Unterlichtbündel interferiert mit einem anderen, da die Laufzeitdifferenzen größer sind als die Kohärenzlänge. Das an dem Flächenteil 30 und an dem Spiegel 52 reflektierte Unterlichtbündel des Teillichtbündels 50 hat jedoch gegenüber dem an dem Flächenteil 28 und dem Spiegel 56 reflektierten Unterlichtbündel des Teillichtbündels 54 eine Laufzeitdifferenz +s -s =0. Die erhöhte optische Weglänge des Lichtbündels 54 wird kompensiert durch die verkürzte optische Weglänge des Teillichtbündels 50. Diese beiden Unterlichtbündel können also miteinander interferieren. Die Interferenz ist am stärksten, wenn die Intensitäten der beiden "Unterlichtbündel" gleich groß sind, wenn das Lichtbündel 54 halb auf einem Flächenteil 28 und halb auf einem Flächenteil 30 steht.

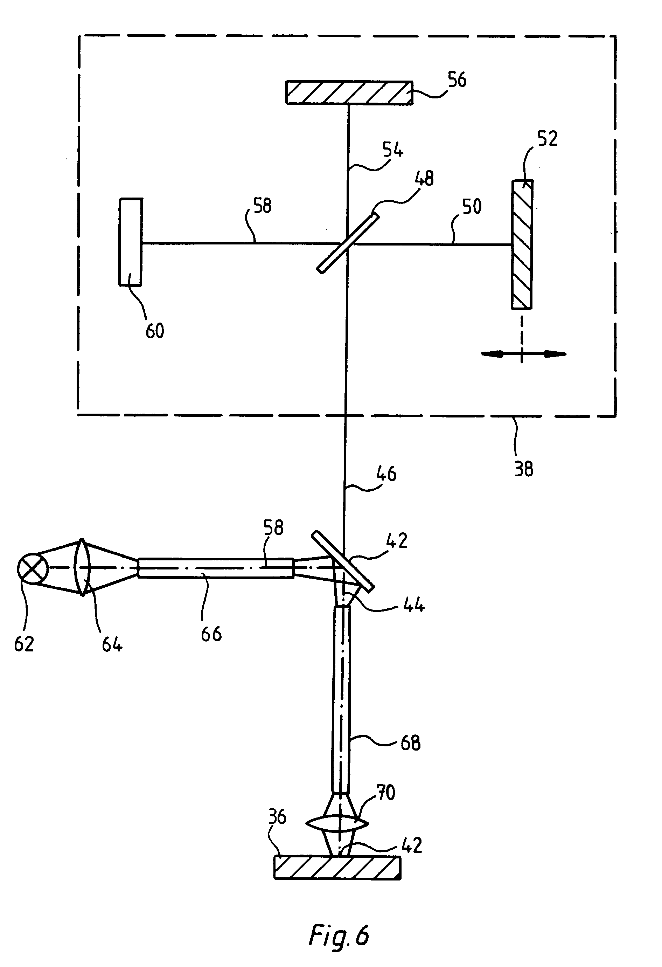

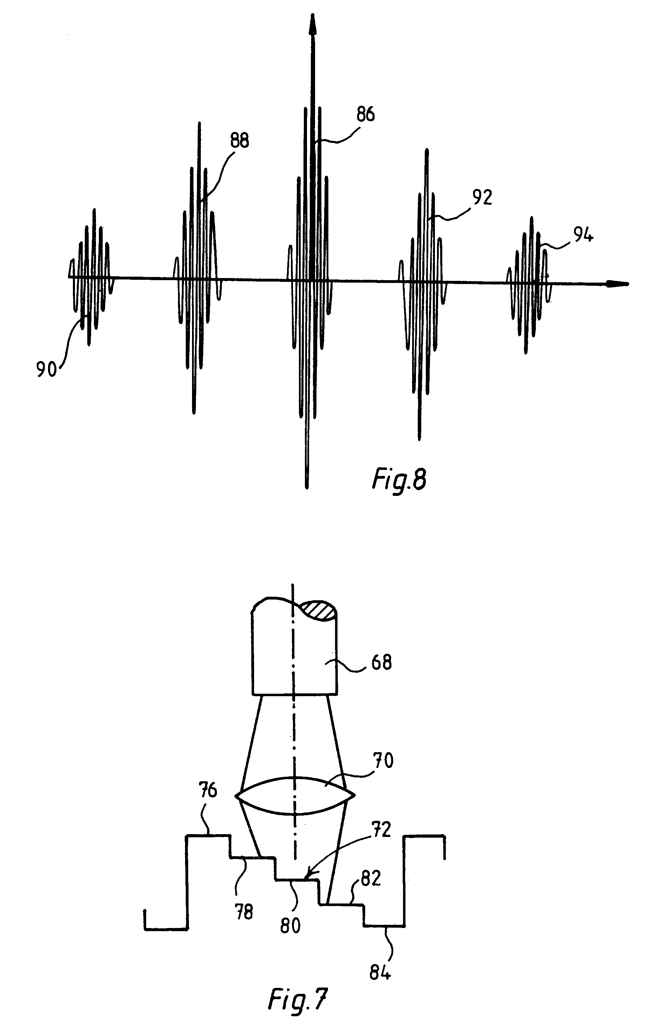

Fig.6 zeigt eine Anordnung, die ähnlich aufgebaut ist wie die Anordnung nach Fig.2. Entsprechende Teile sind in Fig.6 mit den gleichen Bezugszeichen versehen wie dort. Bei der Anordnung nach Fig.6 wird das Lichtbündel 40 von einer Lichtquelle 62 durch eine Abbildungsoptik 64 auf die Stirnfläche eines Lichtleiters 66, z.B. einer lichtleitenden Faser, gerichtet und von dem Lichtleiter 66 zu dem Strahlenteiler 42 geleitet. Das an dem Strahlenteiler 42 reflektierte Lichtbündel 44 wird durch einen Lichtleiter 68 zu dem abzutastenden, beweglichen Codierteil 36 geleitet. Eine Abbildungsoptik 70 erzeugt einen Lichtfleck auf dem Codierteil 36. Das ist in Fig.7 in vergrößertem Maßstab schematisch dargestellt.

Das reflektierte Lichtbündel 44 tritt teilweise durch den Strahlenteiler 42 hindurch und fällt als Interferometer - Lichtbündel 46 auf das Interferometer 38.

Die reflektierende Oberfläche des Codierteiles 36 weist periodische Folgen 74 von jeweils mehreren, stufenförmig angeordneten Flächenteilen 76, 78, 80, 82 und 84 auf. Das ist in Fig.4 stark übertrieben dargestellt und in Fig.7 angedeutet. Die Flächenteile 76,78,80,82 und 84 liegen in äqidistanten Flächen, so daß sich gleich hohe Stufen ergeben.

Wie in Fig.6 durch einen Doppelpfeil 86 angedeutet ist, ist der Spiegel 52 in Richtung des Teillichtbündels hin-und herbewegbar. Diese Bewegung erfolgt über eine Strecke, die der doppelten Tiefe des Flächenteils 84 gegenüber dem Flächenteil 76 entspricht. Die Stufen sind wieder größer als die Kohärenzlänge des benutzten Lichtes. Der von der Abbildungsoptik 70 erzeugte Lichtfleck 72 ist kleiner als die Abmessungen einer der besagten periodischen Folgen 74, wie aus Fig.7 ersichtlich ist.

Die beschriebene Anordnung arbeitet wie folgt:
Der Lichtfleck 72 überdeckt bei der dargestellten Stellung drei Flächenteile 78, 80 und 82 einer Folge 74. Jedes Teillichtbündel 50 und 54 enthält daher drei "Unterlichtbündel", die an den Flächenteilen 78, 80 bzw. 82 reflektiert worden sind. Die an den Flächenteilen 78, 80 und 82 reflektierten Unterlichtbündel haben bezogen auf den Flächenteil 76 Laufzeitdifferenzen von s, 2s bzw. 3s, wobei s die doppelte Stufenhöhe ist. Die Laufzeitdifferenz s ist größer als die Kohärenzlänge des Lichts, so daß die Unterlichtbündel in dem Interferometer - Lichtbündel 46 nicht miteinander interferieren.

Wenn die optischen Weglängen der beiden Teillichtbündel 50 und 54 von dem Strahlenteiler 48 zu dem Spiegel 52 bzw. 56 und zurück sich nur um eine halbe Wellenlänge des verwendeten Lichts oder ein ungeradzahliges Vielfaches einer halben Wellenlänge unterscheiden, erfolgt eine Lichtauslöschung durch Interferenz in jedem "Unterlichtbündel". Entsprechend erfolgt eine Lichtverstärkung, wenn die optischen Weglängen der Teillichtbündel 50 und 54 gleich sind oder sich um eine volle Wellenlänge des verwendeten Lichts unterscheiden. Bei der Bewegung des Spiegels 52 um den durch Gleichheit der optischen Weglängen der Teillichtbündel 50 und 54 bestimmten "Nullpunkt" ergibt sich der in Fig.8 bei 86 dargestellte Intensitätsverlauf am Detektor 60 als Funktion des Stellweges des Spiegels 52.

Wenn sich der Spiegel 52 aus dieser Stellung in Richtung des Teillichtbündels 50 weiter nach links bewegt, dann wird die optische Weglänge des Teillichtbündels 50 entsprechend verkürzt. Wenn die Verkürzung der optischen Weglänge des Teillichtbündels 50 die doppelte Stufenhöhe, also den Wert s erreicht hat, dann erfolgt, ähnlich wie es oben im Zusammenhang mit Fig.2 und 3 schon beschrieben wurde, eine Interferenz zwischen dem an dem Flächenteil 80 und an dem Spiegel 52 reflektierten Unterlichtbündel des Lichtbündels 50 mit dem an dem Flächenteil 78 und dem Spiegel 56 reflektierten Unterlichtbündel des Teillichtbündels 54. Ebenso erfolgt eine Interferenz zwischen dem an dem Flächenteil 82 und dem Spiegel 50 reflektierten Unterlichtbündel des Teillichtbündels 50 und dem an dem Flächenteil 80 und dem Spiegel 56 reflektierten Unterlichtbündel des Teillichtbündels 54. Bei der Bewegung des Spiegels 52 um diese Stellung tritt daher wieder konstruktive und destruktive Interferenz auf und es ergibt sich dabei der in Fig.8 bei 88 dargestellte Intensitätsverlauf am Detektor 60.

Bei einer weiteren Bewegung des Spiegels 52 nach links hört die Interferenz zwischen den vorstehend erwähnten Unterlichtbündeln auf, weil nämlich die optische Weglänge z.B. zwischen dem an dem Flächenteil 80 und dem Spiegel 50 reflektierten Unterlichtbündel des Teillichtbündels 50 um mehr als die Kohärenzlänge kleiner wird als die optische Weglänge des an dem Flächenteil 76 und dem Spiegel 56 reflektierten Unterlichtbündel des Teillichtbündels 54.

Bei einer weiteren Bewegung des Spiegels 52 nach links in Fig.6, wenn die optische Weglänge des Teillichtbündels 50 um den Wert 2s verkürzt ist, erfolgt eine Interferenz des am Flächenteil 78 und am Spiegel 56 reflektierten Unterlichtbündels des Teillichtbündels 54 mit dem am Flächenteil 82 und am Spiegel 52 reflektierten Unterlichtbündel des Teillichtbündels 50. Die verschiedenen Ordnungen der Interferenz liefern einen Intensitätsverlauf in Abhängigkeit vom Stellweg des Spiegels 52, wie er in Fig.8 bei 90 dargestellt ist.

Ähnliche Intensitätsverläufe ergeben sich bei der Bewegung des Spiegels aus der Nullstellung nach rechts in Fig.6. Bei einem Weg des Spiegels 52 von -s ergibt sich eine Interferenz zwischen dem an dem Flächenteil 80 und dem Spiegel 56 reflektierten Unterlichtbündel des Teillichtbündels 54 und dem an dem Flächenteil 78 und dem Spiegel 52 reflektierten Unterlichtbündel des Teillichtbündels 50. Ebenso ergibt sich bei dieser Stellung des Spiegels 52 eine Interferenz zwischen dem an dem Flächenteil 82 und an dem Spiegel 56 reflektierten Unterlichtbündel des Teillichtbündels 54 und dem an dem Flächenteil 80 und den Spiegel 52 reflektierten Unterlichtbündel des Teillichtbündels 50. Dies führt mit den Interferenzen der verschiedenen Ordnung zu einen Intensitätsverlauf, wie er in Fig.8 bei 92 dargestellt ist.

In entsprechender Weise ergibt sich bei der Stellung -2s des Spiegels 52 ein Intensitätsverlauf 94 ähnlich dem Intensitätsverlauf 90.

Bei der Bewegung des beweglichen Codierteiles 36 relativ zu dem Lichtfleck 72 führen die seitlichen "Interferenzpeaks" 88,90, 92 und 94 Pulsationen aus, die zur Erzeugung von Zählimpusen ausgenutzt werden können. Jede Pulsation und damit jeder Zählimpuls entspricht dabei einer Stufe der periodischen Folge 74. Auf diese Weise wird eine hohe Auflösung erreicht, ohne daß der Lichtfleck 72 entsprechend fein ausgebildet zu werden braucht. Die Abtastung durch Hin- und Herbewegung des Spiegels 52 muß natürlich mit einer gegenüber der Frequenz der Zählimpulse hohen Frequenz erfolgen.

Die Folgen von Flächenteilen können auch so ausgeführt sein, wie das in Fig.5 dargestellt ist.

Bei der Ausführung von Fig.5 liegen die Flächenteile 96,98, 100, 102 und 104 jeder Folge 106 wieder in verschiedenen Flächen, die gestrichelt angedeutet sind. Diese Flächen sind aber nicht-äquidistant. Dadurch sind die Laufzeitunterschiede der an den verschiedenen Flächenteilen reflektierten Unterlichtbündel unterschiedlich. Dabei ergibt sich folgendes:

Ein Lichtfleck 108 erfasse bei einer bestimmten Stellung des abzutastenden, beweglichen Codierteils einen Teil des Flächenteils 98, den Flächenteil 100 und einen Teil des Flächenteils 102. Das ist in Fig.5 durch gestrichelte vertikale Linien angedeutet. Dann ergibt sich in der "Nullstellung" des Spiegels 52 die gleiche Situation wie oben in Zusammenhang mit Fig.4 und 7 beschrieben wurde. Die Teillichtbündel 50 und 54 interferieren miteinander, unabhängig davon, ob ein Unterlichtbündel an dem Flächenteil 98, dem Flächenteil 100 oder dem Flächenteil 102 reflektiert worden ist. Es ergibt sich am Detektor ein Intensitätsverlauf in Abhängigkeit vom Weg des Spiegels 52 entsprechend Kurve 86 von Fig.8.

Wenn sich der Spiegel 52 aus der Nullstellung nach links bewegt über die Kohärenzlänge hinaus, tritt keine Interferenz mehr zwischen dem Licht auf, das an ein und demselben Flächenteil reflektiert wurde und durch den Strahlenteiler in die Teilstrahlenbündel 50 und 54 geleitet wurde. Wenn der Spiegel 52 einen Weg durchlaufen hat, welcher der Höhe der Stufe zwischen den Flächenteilen 98 und 100 entspricht, dann interferiert das Unterlichtbündel, das an dem Flächenteil 98 und dem Spiegel 56 reflektiert wird, mit dem Unterlichtbündel, das an dem Flächenteil 100 und dem Spiegel 52 reflektiert wird. Diese Interferenz liefert einen Intensitätsverlauf ähnlich Kurve 88 in Fig.8. Allerdings beinhaltet diese Intensitätskurve im Gegensatz zu Fig.8 keine Interferenz zwischen den Unterlichtbündeln, die an dem Flächenteil 100 und dem Spiegel 56 bzw. an dem Flächenteil 102 und dem Spiegel 52 reflektiert werden.

Bei einer weiteren Bewegung des Spiegels 52 in eine der Stufe zwischen den Flächenteilen 100 und 102 entsprechende Stellung erfolgt eine Interferenz zwischen dem an dem Flächenteil 100 und dem Spiegel 56 reflektierten Unterlichtbündel und dem an dem Flächenteil 102 und dem Spiegel 52 reflektierten Unterlichtbündel. Auch hier ergibt sich wieder ein Intensitätsverlauf ähnlich Kurve 88 in Fig.8, der aber hier wiederum nicht die Interferenz der an den Flächenteilen 98 und 100 reflektierten Unterlichtbündel umfaßt. Der "Interferenzpeak" 88 in Fig.8 ist aufgespalten in zwei Interferenzpeaks am Ort der jeweiligen Stufenhöhen.

Ein dritter Interferenzpeak erscheint bei einem Weg des Spiegels 52 entsprechend der Summe der doppelten Stufen oder dem doppelten Höhenabstand zwischen den Flächenteilen 98 und 102. Entsprechende Interferenzpeaks erscheinen bei einer Bewegung des Spiegels 52 nach rechts von der Nullstellung.

Wenn sich der Lichtfleck 108 gegenüber dem Codierteil 36 bewegt (oder umgekehrt), dann ändern sich die Höhen der Interferenzpeaks in charakteristischer Weise: Bewegt sich der Lichtfleck 108 aus der in Fig. 5 angedeuteten Richtung nach rechts in Fig.5, dann wird der Interferenzpeak, der durch die an den Flächenteilen 98 und 100 reflektierten Unterlichtbündel hervorgerufen wird, kleiner und verschwindet schließlich ganz, weil die Intensität des an dem Flächenteil 98 reflektierten Unterlichtbündels kleiner wird. Der andere Interferenzpeak, der durch die Interferenz der an den Flächenteilen 100 und 102 reflektierten Unterlichtbündel hervorgerufen wird, wird dagegen größer, weil die Intensität des an dem Flächenteil 102 reflektierten Unterlichtbündels umso größer wird, je weiter der Lichtfleck 108 den Flächenteil 102 überdeckt.

Bei einer Bewegung des Lichtflecks 108 nach links in Fig.5 (oder einer entgegengesetzten Bewegung des Codierteils 36) ist es umgekehrt: Der Interferenzpeak, welcher durch die an den Flächenteilen 98 und 100 reflektierten Unterlichtbündel hervorgerufen wird, nimmt zu, und der Interferenzpeak, welcher durch die an den Flächenteilen 100 und 102 hervorgerufen wird, nimmt ab.

Aus den erhaltenen Signalen kann also auf die Bewegungsrichtung geschlossen werden.

Verläßt der Lichtfleck den Flächenteil 98 vollständig und überdeckt den Flächenteil 102 mit den angrenzenden Flächenteilen 100 und 104, dann treten zwei Interferenzpeaks an Stellen auf, die den Höhen der Stufen zwischen den Flächenteilen 100 und 102 bzw. den Flächenteilen 102 und 104 entsprechen. Der Interferenzpeak an der der Höhe der Stufe zwischen den Flächenteilen 98 und 100 entsprechenden Stelle verschwindet.

Aus den so erhaltenen Signalen kann somit nicht nur ein Richtungssignal abgeleitet werden. Es kann auch ein Signal dafür abgeleitet werden, in welchem Bereich der jeweiligen Folge 106 sich der Lichtfleck 108 befindet. Schließlich gestattet das Verhältnis der Höhen der Interferenzpeaks eine Interpolation zwischen den durch die Flächenteile 98 bis 104 vorgegebenen Teilungen.

Das abzutastende bewegliche Codierteil kann auch in Transmission abgetastet werden. Die gestuften Flächenteile können dann durch Flächenteile mit unterschiedlichen Brechungsindizes ersetzt werden.

Lagegeber der beschriebenen Art sind vielseitig anwendbar, beispielsweise in der Steuerungs- und Regelungstechnik zur Bestimmung der Position von Maschinenteilen oder Stellgliedern.

## Patentansprüche

1. Optischer Lagegeber enthaltend:
(a) ein bewegliches Codierteil (22, 36), das mit einer Codierung versehen ist, und
(b) eine optische Abtastvorrichtung (10, 38) zum Abtasten der Codierung, bei welcher ein Lichtbündel (20, 44) auf die Codierung geleitet und nach Beeinflussung durch die Codierung zur Erzeugung eines Abtastsignals, aus dem die Lageinformation ableitbar ist, erfasst wird,
**dadurch gekennzeichnet, dass**
(c) die Codierung zur Erzeugung definierter Laufzeitdifferenzen innerhalb des Lichtbündels ausgebildet ist und
(d) die optische Abtastvorrichtung ein auf die Laufzeitdifferenzen ansprechendes Interferometer zur Umsetzung der Laufzeitdifferenzen in beobachtbare Helligkeitsänderungen enthält.

2. Optischer Lagegeber nach Anspruch 1, **dadurch gekennzeichnet, daß**
(a) das Lichtbündel (44) das bewegliche Codierteil (36) in einem Lichtfleck trifft, in dessen Bereich die Codierung mehrere verschiedene Laufzeitdifferenzen in verschiedenen überlagerten Unterlichtbündeln bewirkt, wobei die Intensitäten des Lichts mit den verschiedenen Laufzeitdifferenzen im Verhältnis zueinander von der Stellung des beweglichen Codierteiles (36) zu dem Lichtbündel (44) abhängen,
(b) die durch die Codierung erzeugten Laufzeitdifferenzen zwischen den besagten Unterlichtbündeln größer sind als die Kohärenzlänge des Lichtes des Lichtbündels (44) und
(c) durch das Interferometer (38) zusätzliche Laufzeitdifferenzen erzeugbar sind, durch welche eine Interferenz zwischen Unterlichtbündeln bewirkt wird

3. Optischer Lagegeber nach Anspruch 1 oder 2, **dadurch gekennzeichnet, daß** das Interferometer (38) ein Michelson - Interferometer ist, bei welchem ein Interferometer - Lichtbündel (46) durch einen Strahlenteiler (48) in zwei Teillichtbündel (50,54) aufgespalten wird, die durch zwei reflektierende Codierteiler (52,56) in sich zurückgeworfen und über den Strahlenteiler (48) in der Ebene eines Detektors (60) zur Interferenz gebracht werden.

4. Optischer Lagegeber nach Anspruch 1 oder 2, **dadurch gekennzeichnet, daß** das Interferometer ein Mach - Zehnder - Interferometer ist.

5. Optischer Lagegeber nach Anspruch 1 oder 2, **dadurch gekennzeichnet, daß** das Interferometer ein Jamin - Interferometer ist.

6. Optischer Lagegeber nach Anspruch 3, **dadurch gekennzeichnet, daß** das abzutastende bewegliche Codierteil (22) eines der besagten reflektierenden Codierteiler des Interferometers (10) bildet.

7. Optischer Lagegeber nach Anspruch 3, **dadurch gekennzeichnet, daß**
(a) die reflektierenden Codierteiler von je einem Spiegel (52,56) gebildet sind,
(b) ein Lichtbündel (40) über einen zweiten Strahlenteiler (42) auf das abzutastende, bewegliche Codierteil (36) umgelenkt und
(c) von diesem durch den Strahlenteiler (42) hindurch als Interferometer - Lichtbündel (46) auf den Strahlenteiler (48) des Interferometers (38) reflektiert wird.

8. Optischer Lagegeber nach Anspruch 7. **dadurch gekennzeichnet, daß** eines der reflektierenden Codierteiler (52) des Interferometers (38) periodisch in Richtung des Teillichtbündels (50) hin- und herbeweglich ist.

9. Optischer Lagegeber nach Anspruch 8, **dadurch gekennzeichnet, daß** das Lichtbündel (44) von dem zweiten Strahlenteiler (42) zu dem abzutastenden, beweglichen Codierteil (36) durch einen Lichtleiter (68) geführt ist.

10. Optischer Lagegeber nach Anspruch 9, **dadurch gekennzeichnet, daß** das Lichtbündel (40) zu dem zweiten Strahlenteiler (42) durch einen Lichtleiter (66) geführt ist.

11. Optischer Lagegeber nach einem der Ansprüche 1 bis 10, **dadurch gekennzeichnet, daß** die Codierung von unterschiedlich tiefen, reflektierenden, zu dem darauffallenden Lichtbündel (44) senkrechten Flächenteilen (28,30; 76 bis 84; 96 bis 104) gebildet ist.

12. Optischer Lagegeber nach Anspruch 11, **dadurch gekennzeichnet, daß** die Flächenteile (28,30) abwechselnd in einer von zwei parallelen Flächen angeordnet sind, deren Abstand der besagten Laufzeitdifferenz entspricht.

13. Optischer Lagegeber nach Anspruch 11, **dadurch gekennzeichnet, daß** das abzutastende, bewegliche Codierteil (36) periodische Folgen (74,106) von jeweils mehreren stufenförmig angeordneten Flächenteilen aufweist.

14. Optischer Lagegeber nach Anspruch 13, **dadurch gekennzeichnet, daß** die Flächenteile (76 bis 84) in äquidistanten Flächen liegen.

15. Optischer Lagegeber nach Anspruch 13, **dadurch gekennzeichnet, daß** die Flächenteile (96 bis 104) in nicht-äquidistanten Flächen liegen.

16. Optischer Lagegeber nach Anspruch 1, **dadurch gekennzeichnet, daß** das abzutastende, bewegliche Codierteil in Transmission abtastbar ist und die Laufzeitdifferenzen durch Flächenteile mit unterschiedlichen Brechungsindizes erzeugt werden.

## Claims

1. Optical position transmitter comprising:
(a) a movable code element (22, 36) provided with a coding, and
(b) an optical scanning device (10,38) for scanning said coding, in which a light beam (20,44) is directed onto the coding and, after having been influenced by the coding, is detected for generating a scanning signal from which the position information can be derived,
**characterized in that**
(c) the coding is formed for generating well-defined optical path differences within the light beam, and
(d) the optical scanning device comprises an interferometer responding to the optical path differences for converting the optical path differences into observable luminosity variations.

2. Optical position transmitter as claimed in claim 1, **characterized in that**
(a) the light beam (44) hits the movable code element (36) in a light spot, in the area of which the coding causes a plurality of different optical path differences in different superimposed sub-light beams, the intensities of the light with the different optical path differences in relation to each other depending on the position of the movable code element (36) relative to the light beam (44),
(b) the optical path differences generated by the coding between said sub-light beams are larger than the coherence length of the light of the light beam (44), and
(c) the interferometer (38) is arranged to generate additional optical path differences by which an inteference between sub-light beams is caused.

3. Optical position transmitter as claimed in claim 1 or 2, **characterized in that** the interferometer (38) is a Michelson interferometer, in which an interferometer light beam (46) is split by a beam splitter (48) into two partial light beams (50,54), which are returned into themselves by two reflecting coding splitters (52,56), and are caused to provide interference through the beam splitter (48) in the plane of a detector (60).

4. Optical position transmitter as claimed in claim 1 or 2, **characterized in that** the interferometer is a Mach-Zehnder interferometer.

5. Optical position transmitter as claimed in claim 1 or 2, **characterized in that** the interferometer is a Jamin interferometer.

6. Optical position transmitter as claimed in claim 3, **characterized in that** the movable code element (22) to be scanned forms one of said reflecting coding splitters of the interferometer (10).

7. Optical position transmitter as claimed in claim 3, **characterized in that**
(a) each of the reflecting coding splitters is formed by a mirror (52,56),
(b) a light beam (40) is deflected through a second beam splitter (42) onto the movable code element (36) to be scanned, and
(c) is reflected thereby through the beam splitter (42) as interferometer light beam (46) onto the beam splitter (48) of the interferometer (38).

8. Optical position transmitter as claimed in claim 7, **characterized in that** one of the reflecting coding splitters (52) of the interferometer (38) is arranged to periodically reciprocate in the direction of the partial light beam (50).

9. Optical position transmitter as claimed in claim 8, **characterized in that** the light beam (44) is guided from the second beam splitter (42) to the movable code element (36) to be scanned through a light guide (68).

10. Optical position transmitter as claimed in claim 9, **characterized in that** the light beam (40) is guided to the second beam splitter (42) through a light guide (66).

11. Optical position transmitter as claimed in anyone of the claims 1 to 10, **characterized in that** the coding is formed by differently deep reflecting surface portions (28,30; 76 to 84; 96 to 104) perpendicular to the incident light beam (44).

12. Optical position transmitter as claimed in claim 11, **characterized** in that the surface portions (28,30) are arranged alternatingly in one of two parallel surfaces, the distance between which corresponds to said optical path difference.

13. Optical position transmitter as claimed in claim 11, **characterized in that** the movable code element (36) to be scanned has periodical sequences (74,106) of pluralities of stepped surface portions.

14. Optical position transmitter as claimed in claim 13, **characterized in that** the surface portions (76 to 84) are located in equidistant surfaces.

15. Optical position transmitter as claimed in claim 1, **characterized in that** the surface portions (96 to 104) are located in non-equidistant surfaces.

16. Optical position transmitter as claimed in claim 1, **characterized in that** the movable code element to be scanned is arranged to be scanned in transmission and the optical path differences are generated by surface portions having different refractive indices.

## Revendications

1. Capteur de position optique, comprenant
(a) un élément de code mobile (22, 36) muni d'un codage, et
(b) un dispositif d'exploration optique (10, 38) destiné à explorer le codage, dans lequel un faisceau lumineux (20, 44) est conduit au codage et, après avoir été soumis à l'influence du codage, il est détecté afin d'engendrer un signal d'exploration à partir duquel on peut dévier l'information de position,
**caractérisé par le fait que**
(c) le codage est formé de sorte à engendrer des différences de trajet optique dans le faisceau lumineux, et
(d) le dispositif d'exploration optique comprend un interferomètre répondant aux différences de trajet optique et destiné à convertir les différences de trajet optique en variations de luminosité observables.

2. Capteur de position optique selon la revendication 1, **caractérisé par le fait que**
(a) le faisceau lumineux (44) rencontre l'élément de code mobile (36) dans une tâche lumineuse dans le domaine de laquelle le codage provoque plusieurs différences de trajet optique différentes dans des sous-faisceaux lumineux superposés différents, les intensités de la lumière avec les différences de trajet optique différentes en rapport l'une à l'autre dépendant de la position de l'élément de code mobile (36) relative au faisceau lumineux (44),
(b) les différences de trajet optique provoquées par le codage sont plus grandes entre lesdits sous-faisceaux lumineux que la longueur de cohérence de la lumière du faisceau lumineux (44), et
(c) l'interferométre (38) est susceptible d'engendrer des différences de trajet optique supplémentaires provoquant une interférence entre les sous-faisceaux lumineux.

3. Capteur de position optique selon la revendication 1 ou 2, **caractérisé par le fait que** l'interferomètre (38) est un interferomètre Michelson dans lequel un faisceau lumineux d'interferomètre (46) est fendu par un dispositif de fractionnement des rayons (48) en deux faisceaux lumineux partiels (50,54) retournés dans eux-mêmes par deux diviseurs de code (52,56) et mis en interférence par le dispositif de fractionnement (48) dans le plan d'un détecteur (60).

4. Capteur de position optique selon la revendication 1 ou 2, **caractérisé par le fait que** l'interferomètre est un interferomètre Mach-Zehnder.

5. Capteur de position optique selon la revendication 1 ou 2, **caractérisé par le fait que** l'interferomètre est un interferomètre Jamin.

6. Capteur de position selon la revendication 3, **caractérisé par le fait que** l'élément de code mobile (22) à explorer forme l'un desdits diviseurs de code réfléchissant de l'interferomètre (10).

7. Capteur de position optique selon la revendication 3, **caractérisé par le fait que**
(a) les diviseurs de code réfléchissant sont formés par un miroir (52,56) chacun,
(b) un faisceau lumineux (40) est dévié par un second dispositif de fractionnement (42) sur l'élément de code mobile (36) à explorer, et
(c) est réflété par celui-ci à travers le dispositif de fractionnement (42) comme faisceau lumineux d'interferomètre (46) sur le dispositif de fractionnement (48) de l'interferomètre (38).

8. Capteur de position optique selon la revendication 7, **caractérisé par le fait que** l'un des diviseurs de code (52) réfléchissant de l'interferomètre (38) est mobile dans les deux sens périodiquement dans la direction du faisceau lumineux partiel (50).

9. Capteur de position optique selon la revendication 7, **caractérisé par le fait que** le faisceau lumineux (44) est guidé du second dispositif de fractionnement (42) vers l'élément de code mobile (36) à explorer, par un guide de lumière (68).

10. Capteur de position optique selon la revendication 9, **caractérisé par le fait que** le faisceau lumineux (40) est guidé au second dispositif de fractionnement (42) par un guide de lumière (66).

11. Capteur de position optique selon la revendication 9, **caractérisé par le fait que** le codage est formé par des parties de surface (28,30; 76 à 84; 96 à 104) réfléchissantes perpendiculaires au faisceau lumineux (44) incident et d'une profondeur différente.

12. Capteur de position optique selon la revendication 11, **caractérisé par le fait que** les parties de surface (28,30) sont disposées alternativement dans l'une des deux surfaces parallèles dont l'écart correspond à ladite différence de trajet optique.

13. Capteur de position optique selon la revendication 11, **caractérisé par le fait que** l'élément de code mobile (36) à explorer présente des séquences périodiques (74, 106) de plusieurs parties de surface disposées en échelon.

14. Capteur de position optique selon la revendication 13, **caractérisé par le fait que** les parties de surface (76 84) sont disposées dans des surfaces équidistantes.

15. Capteur de position optique selon la revendication 13, **caractérisé par le fait que** les parties de surface (96 à 104) sont disposées dans des surfaces non-équidistantes.

16. Capteur de position optique selon la revendication 1, **caractérisé par le fait que** l'élément de code mobile à explorer est susceptible d'être exploré en transmission, et les différences de trajet optique sont engendrées par des parties de surface à indices de réfraction différents.
